# NOUVEAU FASCICULE DE BREVET EUROPEEN

(11) **EP 0 378 464 B2**
(45) Date de publication et mention de la décision concernant l'opposition: **28.10.1998**
(45) Mention de la délivrance du brevet: 29.09.1993
(21) Numéro de dépôt: 90400051.0
(22) Date de dépôt: 08.01.1990
(51) Int. Cl.: F16F 13/00, B60K 5/12

(54) **Perfectionnements aux dispositifs antivibratoires hydrauliques**
Änderungen an hydraulischen Antischwingungsvorrichtungen
Modifications of hydraulic antivibration devices

(30) Priorité: 10.01.1989 FR 8900211
(43) Date de publication de la demande: 18.07.1990
(73) Titulaire: HUTCHINSON, F-75008 Paris (FR)
(72) Inventeur: Bretaudeau, Jean-Pierre, F-28200 Chateaudun (FR); Salaud, Jean-Luc, F-78700 Conflans Ste Honorine (FR)
(74) Mandataire: Burbaud, Eric

(56) Documents cités:
- EP-A- 187 188
- EP-A- 213 043
- EP-A- 0 187 188
- EP-A- 0 213 043
- WO-A-90/05246
- DE-A- 3 336 708
- DE-A- 3 336 708
- DE-A- 3 339 054
- DE-A- 3 437 784
- DE-A- 3 633 827
- DE-C- 3 339 054
- JP-A-61 096 229
- US-A- 4 671 227

## Description

L'invention est relative aux dispositifs antivibratoires hydrauliques destinés à être interposés aux fins d'amortissement et de liaison, voire de support, entre deux structures rigides tels qu'un châssis de véhicule et que le moteur de ce véhicule.

Elle concerne plus particulièrement, parmi ces dispositifs (voir par exemple DE-C-33 39 054 et DE-A-33 36 708), ceux qui comportent :
- deux armatures rigides solidarisables respectivement avec les deux structures rigides à réunir,
- une cloison étanche annulaire en élastomère interposée entre les deux armatures et offrant une bonne résistance à la compression axiale, cette cloison formant au moins avec les armatures une première chambre déformable étanche,
- une membrane flexible et étanche portée par l'une des armatures et formant au moins avec celle-ci une seconde chambre déformable étanche, la périphérie de cette membrane étant armée par une rondelle peu déformable,
- un passage étranglé faisant communiquer en permanence les deux chambres entre elles,
- une masse de liquide remplissant les deux chambres ainsi que le passage étranglé,
- et un couvercle rigide de protection coiffant la membrane et fixé par sertissage à la même armature que cette membrane, ledit couvercle étant agencé de façon à pouvoir coopérer avec des moyens de fixation de celui-ci sur l'une des deux structures rigides.

Comme on le sait, avec un dispositif, l'application sur l'une des armatures, selon la direction axiale, d'oscillations de relativement grande amplitude (généralement supérieure à 0,5 mm) et de relativement basse fréquence (généralement de l'ordre de 5 à 30 Hz) ont pour effet de refouler le liquide de l'une des deux chambres dans l'autre et inversement à travers le passage étranglé, avec mise en résonance de la masse liquide ainsi refoulée lorsque la fréquence des oscillations atteint une valeur prédéterminée qui est fonction du rapport entre la longueur et la section droite du passage étranglé, cette mise en résonance assurant un excellent amortissement des oscillations concernées.

Dans les modes de réalisation connus de ces dispositisf auxquels l'invention se rapporte plus particulièrement, la membrane flexible est coiffée par un couvercle rigide de protection, lequel est localement ajouré pour que le volume disposé à l'intérieur du couvercle et à l'extérieur de la membrane soit mis à l'air libre.

Ce couvercle doit être monté sur l'armature correspondante du dispositif, généralement par un sertissage assurant lui-même le montage étanche de la membrane sur ladite armature.

Les deux armatures rigides constitutives du dispositif doivent ensuite être montées elles-mêmes sur les deux structures rigides, ce qui requiert des opérations particulières de centrage et de fixation faisant appel en général à des vissages.

Dans certains cas ces vissages mettent en oeuvre des systèmes boulons-écrous qui traversent des oreilles faisant saillie extérieurement sur le couvercle, à proximité immédiate de ce couvercle (voir les documents DE-C-33 39 054 et DE-A-33 36 708).

L'invention se rapporte plus particulièrement au cas où l'armature rigide solidaire du couvercle doit être fixée par l'intermédiaire d'un bras rigide sur la structure principale porteuse ou portée, structure telle que le carter du moteur d'un véhicule ou que le châssis de ce véhicule.

Avec les modes de réalisation connus, cette fixation est effectuée, généralement par vissage, d'une part, entre le couvercle ou l'armature rigide dont il est solidaire et l'une des extrémités du bras de liaison et, d'autre part, entre l'autre extrémité de ce bras et ladite structure principale.

L'invention a pour but, surtout, de simplifier le montage global des dispositifs du genre en question et de réduire le coût de l'ensemble composé par un tel dispositif et par le bras qui lui est associé.

A cet effet, ce dispositif est essentiellement caractérisé selon l'invention en ce que son couvercle est prolongé par un bras rigide s'étendant radialement à partir du fond du couvercle, ledit bras étant lui-même prolongé, à son extrémité la plus éloignée du couvercle, par une platine de fixation, l'ensemble de ce couvercle, de ce bras et de cette platine formant une pièce monobloc, en ce que la portion du bras qui tient lieu de couvercle présente la forme générale d'un boîtier ouvert comprenant un fond plat et un bord cylindrique prolongé radialement vers l'extérieur par deux rebords plats s'étendant dans deux zones diamétralement opposées et en ce que l'armature correspondante du dispositif comprend elle-même autour de la membrane flexible un bord cylindrique dont deux portions diamétralement opposées sont rabattues intérieurement sur ladite membrane flexible aux fins de sertissage étanche de celle-ci, les deux autres portions diamétralement opposées dudit bord étant rabattues intérieurement sur les rebords plats du bras aux fins de fixation de ladite armature sur ce bras, les rebords plats du couvercle s'étendant sensiblement selon une direction diamétrale perpendiculaire à la direction correspondant à la plus grande dimension du bras de façon que ces rebords soient accessibles par une machine de sertissage.

Il est donc inutile de prévoir sur le couvercle des éléments de fixation pour le bras, éléments tels que des oreilles, ces éléments étant reportés à l'extrémité, du bras, éloignée du couvercle.

Le dispositif peut éventuellement être encerclé jointive ment par au moins un anneau inextensible formant butée de traction axiale et présentant un tronçon porté par une piste de guidage aménagée sur le bras.

Avantageusement, la pièce monobloc formée par le bras, le couvercle et la platine est une pièce de fonderie coulée et nervurée.

L'invention sera mieux comprise à la lecture de la description qui suit d'un mode particulier de réalisation, donné à titre d'exemple non limitatif.

Cette description se réfère aux dessins qui l'accompagnent dans lesquels :
- la figure 1 montre schématiquement l'ensemble d'un moteur de véhicule monté sur le châssis de ce véhicule à l'aide de supports hydrauliques établis conformément à l'invention,
- les figures 2 et 3 montrent à plus grande échelle l'un de ces supports, respectivement en vue de côté, partie coupée selon II-II, Figure 3 et en plan,
- la figure 4 montre en plan un composant du dispositif ci-dessus en son état correspondant à une phase intermédiaire du montage.

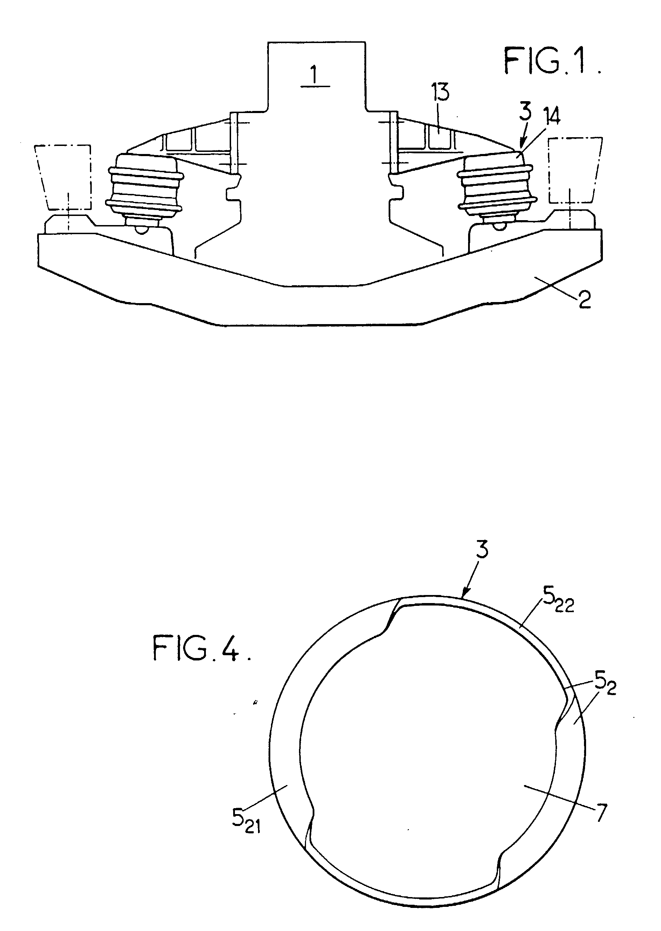

On se propose de monter un moteur 1 de véhicule sur le châssis 2 de ce véhicule, représenté par une traverse sur la figure 1, à l'aide d'au moins deux supports antivibratoires hydrauliques qui sont désignés chacun dans leur ensemble par la référence 3.

D'une façon connue en soi, chaque support 3 comprend :
- une embase rigide 4 constituée par un plot central 4₁ prolongé vers le bas par un goujon 4₂ en attente et par un doigt de centrage 4₃,
- un anneau rigide 5 d'axe X sensiblement vertical sur la constitution duquel on reviendra plus loin,
- une paroi tronconique épaisse 6 d'axe X en élastomère présentant une bonne résistance à la compression axiale de façon à jouer un rôle de "support" et reliant de façon étanche l'embase 4 à l'anneau 5,
- un soufflet ou membrane mince et flexible 7 relié de façon étanche à l'anneau 5 et délimitant une enceinte fermée avec cet anneau, la paroi 6 et l'embase 4,
- une cloison rigide intermédiaire 8 divisant l'enceinte en deux chambres, savoir une chambre de travail A du côté de la paroi 6 et une chambre de compensation B du côté du soufflet 7,
- un passage étranglé 9 reliant les deux chambres A et B entre elles,
- une masse de liquide L remplissant les deux chambres et le passage étranglé,
- et un clapet 10 monté entre deux grilles 11 et 12 constituant la cloison intermédiaire 8, ce montage étant effectué de façon telle que l'amplitude des débattements axiaux du clapet soit limitée à une valeur inférieure à 1 mm et de préférence de l'ordre de 0,5 mm.

Comme on le sait, le fonctionnement d'un tel support est le suivant :

Lorsque des oscillations de relativement grande amplitude (généralement supérieure à 0,5 mm) et de fréquence F relativement basse (généralement comprise entre 5 et 30 Hz) sont appliquées selon la direction de l'axe X entre l'embase 4 et l'anneau 5, ces oscillations se traduisent par un refoulement alternatif du liquide L dans le passage étranglé 9 et, pour une valeur donnée de la fréquence F qui dépend essentiellement des dimensions dudit passage 9, il se produit dans la colonne de liquide présente dans ce passage un effet de résonance s'opposant auxdites oscillations.

En outre, la présence du clapet 10 permet de filtrer les vibrations dont l'amplitude est relativement faible, savoir inférieure à 0,5,mm et dont la fréquence est relativement élevée, savoir en général supérieure à 40 Hz.

D'une façon également connue en soi, le goujon 4₂ est fixé sur une portée appropriée du châssis 2 par coopération avec un écrou (non représenté).

Dans les modes de réalisation connus, un couvercle rigide est rapporté sur l'anneau 5 de façon à coiffer la membrane flexible 7 à des fins de protection et cet anneau 5 est lui-même fixé sur le carter du moteur 1 par l'intermédiaire d'un bras rigide 13 : à cet effet, on utilise par exemple un goujon (non représenté) faisant saillie vers le haut à partir du fond du couvercle.

En d'autres termes, dans les réalisations en question, il faut fixer le couvercle d'une part sur le reste du dispositif 3 et d'autre part sur le bras 13 par deux opérations distinctes qui sont toutes les deux indépendantes du montage du bras sur le carter.

L'invention permet de supprimer l'une de ces deux opérations, savoir la fixation du couvercle sur le bras.

A cet effet, selon l'invention, le couvercle 14 fait partie intégrante du bras 13.

Dans les modes de réalisation préférés, tels que celui illustré, ce couvercle est venu de moulage avec le bras, formant avec lui une pièce de fonderie unique en métal coulé.

Plus précisément, le couvercle 14 comprend ici un fond 15 pratiquement plat et un bord cylindrique 16 prolongé extérieurement par deux rebords plats 17 s'étendant chacun selon un arc d'environ 90° et disposés respectivement dans deux zones du couvercle diamétralement opposées.

Le bras 13 se présente sous la forme générale d'une potence ou console nervurée dont une extrémité, relativement étroite, est prolongée par le couvercle 14, qui est ouvert ici vers le bas et dont l'autre extrémité, élargie, se termine par une platine de fixation 18, elle-même perforée par des lumières 19 propres à recevoir des vis ou organes de fixation analogues.

L'anneau rigide 5 est ici constitué par une virole métallique qui comporte :
- un tronçon métallique 5₁ entourant jointivement la cloison 8,
- un bord 5₂ prolongeant ce tronçon 5₁ vers le haut et initialement cylindrique sur tout son pourtour,
- et un col étranglé 5₃ prolongeant le tronçon 5₁ vers le bas et terminé inférieurement par une jupe tronconique divergente 54 sur laquelle adhère la paroi 6.

Le bord 5₂ comprend quant à lui :
- d'une part, deux premiers segments 5_{21'} diamétralement opposés, destinés à être rabattus intérieurement contre la périphérie de la membrane 7, elle-même armée par une rondelle 20 peu déformable, présentant par exemple un profil en L, ce rabattement ayant pour effet de sertir de façon étanche ladite membrane 7 contre la cloison 8,
- et d'autre part, deux seconds segments 5₂₂, interposés entre les deux premiers, et servant à sertir l'ensemble du support 3 sur le bras 13 par leur rabattement intérieur contre les rebords plats 17 de ce bras.

La figure 4 montre le support 3 vu de dessus, après sertissage de la membrane 7, mais avant montage de ce support sur l'ensemble monobloc bras 13-couvercle 14

C'est généralement en cet état du montage qu'intervient le remplissage du support en liquide amortisseur L.

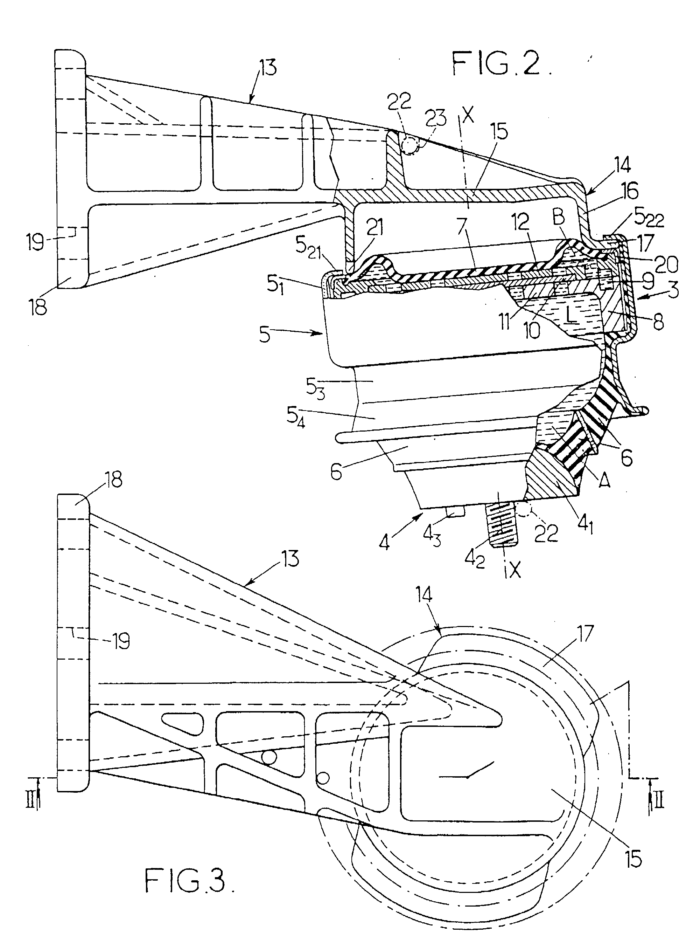

Comme visible sur les figures 3 et 4, les étendues angulaires des deux segments 5₂₂ correspondent à celles des rebords 17 sur lesquels ils doivent être rabattus.

On peut noter également que ces segments 5₂₂ ne sont pas opposés diamétralement de façon rigoureuse, les deux autres segments 5₂₁ s'étendant respectivement sur des arcs diférents, qui sont ici respectivement de 74 et 106°.

Comme visible sur la figure 3, ce léger décalage angulaire ainsi que l'orientation générale des rebords 17, qui correspond à une direction perpendiculaire à la grande dimension du bras, permettent de dégager complètement les abords verticaux de ces rebords 17 par rapport au reste du bras 13, ce qui permet leur accessibilité intégrale pour les machines à sertir travaillant notamment par moletage ou galetage.

On voit encore sur la figure 2 que la hauteur du bord 16 du couvercle 14 est raccourcie, au moins localement, dans ses portions autres que celles prolongées par les rebords 17, ce qui permet de réserver des lumières 21 pour mettre à l'air libre l'intérieur de ce couvercle.

On peut par ailleurs mettre à profit l'existence du bras 13 pour encercler jointivement l'ensemble du support 3 par au moins un anneau inextensible 22 (figure 2) formant "butée de traction axiale" et s'opposant ainsi à une destruction du support par arrachement : en effet, si on le compare à un simple couvercle muni d'éléments de fixation, le bras présente plus de possibilités d'aménagement pour des pistes 23 de réception et guidage de tels anneaux.

## Revendications

1. Dispositif antivibratoire hydraulique destiné à être interposé, aux fins d'amortissement et de liaison, entre deux structures rigides (1, 2), comportant :
- deux armatures rigides (4, 5) solidarisables respectivement avec les deux structures rigides à réunir,
- une cloison étanche annulaire en élastomère (6) interposée entre les deux armatures et offrant une bonne résistance à la compression axiale, cette cloison formant au moins avec les armatures une première chambre déformable (A) étanche,
- une membrane flexible et étanche (7) portée par l'une des armatures (5) et formant au moins avec celle-ci une seconde chambre déformable (B) étanche, la périphérie de cette membrane étant armée par une rondelle (20) peu déformable,
- un passage étranglé (9) faisant communiquer en permanence les deux chambres entre elles,
- une masse de liquide (L) remplissant les deux chambres ainsi que le passage étranglé,
- et un couvercle rigide de protection (14) coiffant la membrane (7) et fixé par sertissage à la même armature (5) que cette membrane, ledit couvercle étant agencé de façon à pouvoir coopérer avec des moyens de fixation de celui-ci sur l'une des deux structures rigides,
**caractérisé en ce que** le couvercle (14) est prolongé par un bras rigide (13) s'étendant radialement à partir du fond du couvercle (14), ledit bras (13) étant lui-même prolongé, à son extrémité la plus éloignée du couvercle, par une platine de fixation (18), l'ensemble de ce couvercle, de ce bras et de cette platine formant une pièce monobloc,
**en ce que** la portion du bras (13) qui tient lieu de couvercle (14) présente la forme générale d'un boîtier ouvert comprenant un fond plat (15) et un bord cylindrique (16) prolongé radialement vers l'extérieur par deux rebords plats (17) s'étendant dans deux zones diamétralement opposées,
**et en ce que** l'armature correspondante (5) comprend elle-même autour de la membrane (7) un bord cylindrique (5₂) dont deux portions diamétralement opposées (5₂₁) sont rabattues intérieurement sur ladite membrane aux fins de sertissage étanche de celle-ci, les deux autres portions diamétralement opposées (5₂₂) dudit bord étant rabattues intérieurement sur les rebords plats (17) du bras (13) aux fins de fixation de ladite armature (5) sur ce bras, les rebords plats (17) du couvercle s'étendant sensiblement selon une direction diamétrale perpendiculaire à la direction correspondant à la plus grande dimension du bras (13) de façon que ces rebords soient accessibles par une machine de sertissage.

2. Dispositif selon la revendication 1, caractérisé en ce qu'il est encerclé jointivement par au moins un anneau inextensible (22) formant butée de traction axiale et présentant un tronçon porté par une piste de guidage (23) aménagée sur le bras (13).

3. Dispositif selon la revendication 1, dans lequel la pièce monobloc formée par le bras (13), le couvercle (14) et la platine (18) est une pièce de fonderie coulée et nervurée.

## Patentansprüche

1. Hydraulische Antischwingungsvorrichtung, die zum Zwecke der Dämpfung und der Verbindung zwischen zwei starren Bauelementen (1, 2) einbaubar ist, bestehend aus folgenden Teilen:
- zwei starren Armaturen (4, 5), die an den beiden miteinander zu verbindenden starren Bauteilen anbringbar sind,
- einer dichten, ringförmigen Trennwand (6) aus elastomerem Material, die zwischen den beiden Armaturen eingesetzt ist und einen hohen Widerstand gegenüber axialer Druckbeanspruchung aufweist, wobei die Trennwand wenigstens mit den Armaturen eine erste dichte, deformierbare Kammer (A) bildet,
- einer biegsamen und dichten Membran (7), die an einer der Armaturen (5) angebracht ist und wenigstens mit dieser eine zweite dichte, deformierbare Kammer bildet (B), wobei der Umfang dieser Membran durch einen wenig deformierbaren Ring (20) verstärkt ist,
- einem engen Durchlaß (9), der die beiden Kammern ständig miteinander verbindet,
- einer flüssigen Masse (L), die die beiden Kammern sowie den engen Durchlaß ausfüllt
- und einem starren Schutzdeckel (14), der die Membran (7) abdeckt und an der gleichen Armatur (5) durch Verquetschen angebracht ist wie die Membran, wobei der Deckel so ausgebildet ist, daß er mit Einrichtungen zur Befestigung des Deckels an einem der beiden starren Bauelemente zusammenwirken kann, dadurch gekennzeichnet, daß der Deckel (14) über einen starren Arm (13), der sich von dem Boden des Deckels (14) ausgehend in radialer Richtung erstreckt verlängert ist, wobei sich an den Arm selbst an seinem von dem Deckel am weitesten entfernten Ende eine Befestigungsplatte (18) anschließt und der Deckel, der Arm und die Platte aus einem einzigen Werkstück bestehen, daß der Abschnitt des Armes (13), der den Deckel (14) bildet, die allgemeine Form eines offenen Gehäuses mit einem ebenen Boden (15) und einer zylindrischen Umrandung (16) hat, die radial nach außen durch zwei ebene umgebogene Ränder (17) verlängert ist, die sich in zwei sich diametral gegenüberliegenden Zonen erstrecken,
- und daß die entsprechende Armatur (15) ihrerseits um die Membran (7) einen zylindrischen Randabschnitt (5₂) mit zwei sich diametral gegenüberliegenden Abschnitten (5₂₁) aufweist, die nach innen über die Membran umgebogen sind, um diese dicht einzusetzen, wobei die beiden anderen sich diametral gegenüberliegenden Abschnitte (5₂₂) des Randabschnittes nach innen über die ebenen Ränder (17) des Armes (13) umgebogen sind, um die Armatur (5) an dem Arm zu befestigen, und sich die ebenen umgebogenen Ränder (17) des Deckels im wesentlichen in einer diametralen Richtung senkrecht zu der Richtung erstrecken, in der der Arm (13) seine größte Abmessung hat, so daß diese umgebogenen Ränder für die Bördelmaschine zugänglich sind.

2. Vorrichtung nach Anspruch 1, dadurch gekennzeichnet, daß sie dicht von wenigstens einem Ring (22) aus nicht dehnbarem Material umfaßt ist, der einen axialen Zuganschlag bildet und einen Abschnitt aufweist, der in einer Führungsbahn gehalten wird, die an dem Arm (13) ausgenommen ist.

3. Vorrichtung nach Anspruch 1, in der das aus dem Arm (13), dem Deckel (14) und der Platte (18) bestehende einzige Werkstück ein mit Rippen versehenes Gußstück ist.

## Claims

1. Hydraulic antivibratory device intended to be inserted for damping and connecting purposes between two rigid structures (1,2), comprising:
- two rigid frames (4,5) which can be fixed respectively to the two rigid structures to be joined together,
- an annular impervious elastomer partition (6) inserted between the two frames and offering good axial compression strength, this partition forming at least with the frames a first tight deformable chamber (A),
- a flexible and impervious membrane (7) carried by one of the frames (5) and forming at least therewith a second tight deformable chamber (B), the periphery of this membrane being reinforced by an indeformable washer (20),
- a restricted passage (9) providing permanent communication between the two chambers,
- a liquid mass (L) filling the two chambers and the restricted passage,
- and a rigid protective cover (14) covering the membrane (7) and fixed by crimping to the same frame (5) as this membrane, said cover being arranged so as to be able to cooperate with fixation means of it on one of the two rigid frames,
characterized in that the cover (14) is prolonged by a rigid arm (13) which extends radially from the bottom of the cover (14), said arm being itself prolonged, at its end which is the farthest from the cover, by a fixing plate (18), the whole of this cover, of this arm and of this plate forming a single piece,
in that the portion of the arm (13) which serves as cover (14) has the general shape of an open box comprising a flat bottom (15) and a cylindrical edge (16) extended radially outwardly by two flat flanges (17) extending in two diametrically opposite zones,
and in that the corresponding frame (5) itself comprises, about the membrane (7), a cylindrical edge (5₂) whose two diametrically opposite portions (5₂₁) are bent inwardly on said flexible membrane for sealingly crimping the latter, the other two diametrically opposite portions (5₂₂) of said edge being bent inwardly over the flat flanges (17) of the arm (13) for fixing said frame (5) to this arm, the flat flanges (17) of the cover extending substantially in a diametrical direction perpendicular to the direction corresponding to the largest dimension of the arm (13) so that these flanges are accessible for a crimping machine.

2. Device according to claim 1, characterized in that it is encircled jointingly by at least one inextensible ring (22) forming an axial traction stop and having a section carried by a guide track (23) formed on the arm (13).

3. Device according to claim 1, in which the single piece formed by the arm (13), the cover (14) and the fixing plate (18) is a cast metal part having ribs.
